# EUROPÄISCHE PATENTSCHRIFT

(11) **EP 4 334 895 B1**
(45) Veröffentlichungstag und Bekanntmachung des Hinweises auf die Patenterteilung: **19.03.2025**
(21) Anmeldenummer: 22718698.8
(22) Anmeldetag: 28.03.2022
(51) Int. Cl.: G06T 7/00, G06T 7/60, G06T 7/62

(54) **VERFAHREN ZUR UEBERWACHUNG DER QUALITAETSEIGENSCHAFTEN EINES ZELLSTOFFBALLENS IN EINER BALLENLINIE**
METHOD FOR MONITORING THE QUALITY PROPERTIES OF A CELLULOSE BALE IN A BALE LINE
PROCÉDÉ DE SURVEILLANCE DES PROPRIÉTÉS DE QUALITÉ D'UNE BALLE DE CELLULOSE DANS UNE LIGNE DE PRODUCTION DE BALLES

(30) Priorität: 06.05.2021 AT 503472021
(43) Veröffentlichungstag der Anmeldung: 13.03.2024
(73) Patentinhaber: Andritz AG, 8045 Graz (AT)
(72) Erfinder: BERGMANN, Michael, 9173 St. Margareten im Rosental (AT); GRATZER, Gernot, 8046 Stattegg (AT); KONJEVOD, Armin, 8010 Graz (AT)
(74) Vertreter: Anzel, Andreas
(86) Internationale Anmeldenummer: PCT/EP2022/058145
(87) Internationale Veröffentlichungsnummer: WO 2022/233499

(56) Entgegenhaltungen:
- JP-A- 2014 038 013
- KARHULA P: "Using intelligent cameras in pulp production", COMPENDEX, ENGINEERING INFORMATION, INC., NEW YORK, NY, US, 1 January 2018 (2018-01-01), XP002807018
- DATABASE COMPENDEX [online] ENGINEERING INFORMATION, INC., NEW YORK, NY, US; 2018, KARHULA P: "Using intelligent cameras in pulp production", Database accession no. E20191806857873
- KARHULA P: "Using intelligent cameras in pulp production", PULPING ENGINEERING AND ENVIRONMENTAL RECYCLING SUSTAINABILITY CONFERENCE, PEERS 2018: TECHNICAL SOLUTIONS FOR TODAY AND BEYOND - PULPING ENGINEERING AND ENVIRONMENTAL RECYCLING SUSTAINABILITY CONFERENCE, PEERS 2018: TECHNICAL SOLUTIONS FOR TODAY AND, 2018, pages 203 - 206
- KARHULA PETRI: "Using Intelligent Cameras in Pulp Production", PULPING ENGINEERING AND ENVIRONMENTAL RECYCLING SUSTAINABILITY CONFERENCE 2018: TECHNICAL SOLUTIONS FOR TODAY AND BEYOND, PEERS 2018, 31 October 2018 (2018-10-31), XP093066620, ISBN: 978-1-5108-7469-5, Retrieved from the Internet <URL:https://imisrise.tappi.org/TAPPI/Products/18/PEE/18PEE23.aspx>
- DATABASE COMPENDEX [online] ENGINEERING INFORMATION, INC., NEW YORK, NY, US; 2018, KARHULA P: "Using intelligent cameras in pulp production", XP002807018, Database accession no. E20191806857873
- KARHULA P: "Using intelligent cameras in pulp production", PULPING ENGINEERING AND ENVIRONMENTAL RECYCLING SUSTAINABILITY CONFERENCE, PEERS 2018: TECHNICAL SOLUTIONS FOR TODAY AND BEYOND - PULPING ENGINEERING AND ENVIRONMENTAL RECYCLING SUSTAINABILITY CONFERENCE, PEERS 2018: TECHNICAL SOLUTIONS FOR TODAY AND, 2018, pages 203 - 206
- KEISUKE TATENO ET AL: "CNN-SLAM: Real-time dense monocular SLAM with learned depth prediction", ARXIV.ORG, CORNELL UNIVERSITY LIBRARY, 201 OLIN LIBRARY CORNELL UNIVERSITY ITHACA, NY 14853, 11 April 2017 (2017-04-11), XP080762383, DOI: 10.1109/CVPR.2017.695
- XIAO JIANXIONG ET AL: "Localizing 3D cuboids in single-view images", ADVANCES IN NEURAL INFORMATION PROCESSING SYSTEMS 25 (NIPS 2012), 3 December 2012 (2012-12-03), XP055939149, Retrieved from the Internet <URL:https://proceedings.neurips.cc/paper/2012/file/58238e9ae2dd305d79c2ebc8c1883422-Paper.pdf> [retrieved on 20220706]

## Beschreibung

Die Erfindung betrifft ein Verfahren zur Überwachung der geometrischen Eigenschaften, wie zum Beispiel der Form, eines Zellstoffballens in einer Ballenlinie einer Zellstoffmaschine, wobei geschnittene Zellstoffblätter zu einem Zellstoffballen gestapelt werden. Die Erfindung betrifft weiter eine Ballenlinie einer Zellstoffmaschine mit einem Kamerasystem und ein Computerprogrammprodukt.

Die CN101369549A betrifft eine Vorrichtung und Verfahren, wobei mittels einer automatischen Bildverarbeitung bestimmt werden kann, ob Halbleiter Chips übereinander gestapelt wurden. Dabei muss eine Zielebene mit einer sichtbaren Lichtquelle beleuchtet werden.

Die DE102005009835A1 beschreibt ein Verfahren zum deckungsgleichen Ablegen von Presspaketen auf die Pressfläche einer Kurztakt-Presse bei der Herstellung von Dekorplatten, wobei an den Rändern der Presspakete geeignete, ggf. farbige, Ausrichtmarkierungen und an den Pressflächen gleichartige Ausrichtmarkierungen erforderlich sind.

Die JP2014038013A betrifft eine Vorrichtung und ein Verfahren zur Erfassung der Qualität der Stapelung von Blättern. Dabei wird Laserlicht linear über die Höhe der Stapelung projiziert.

Die WO2017071683A1 betrifft eine Vorrichtung und ein Verfahren zum deckungsgleichen Legen von in einer Presse miteinander zu verpressenden Werkstückschichten mit einem Kamerasystemen zur Positionserkennung der einzelnen Werkstückschichten und der einzelnen Werkstückstapel.

Die DE19909518A1 betrifft ein Verfahren zur Erfassung der Lage eines gestapelten flachen Materials, insbesondere eines Papierstapels am Anleger einer Druckmaschine, wobei mindestens ein Lichtstrahl auf die Stapelseite gerichtet, von dort reflektiert und als Maß für die Lage ausgewertet wird.

In Zellstoffmaschinen wird der bahnförmig hergestellte Zellstoff in Längs- und Querschneidern zu Zellstoffblättern verarbeitet. In der Ballenlinie der Zellstoffmaschine werden die geschnittenen Zellstoffblätter zu Zellstoffballen gestapelt, der Zellstoffballen in einer Ballenpresse komprimiert und der komprimierte Ballen verpackt, verschnürt und bedruckt. Um einen effizienten Betrieb der Ballenlinie, insbesondere der Ballenpresse, sicherzustellen, müssen die Zellstoffballen ausreichende Qualitätseigenschaften, insbesondere in Bezug auf die geometrischen Eigenschaften, wie zum Beispiel die Form, aufweisen. So verursachen unförmige Zellstoffballen, aber auch eine ungleichmäßige Stapelung der Zellstoffblätter zu Zellstoffballen Probleme in den nachfolgenden Prozessschritten und insbesondere in der Ballenpresse. Zellstoffballen, die den Qualitätsanforderungen nicht entsprechen, werden bevorzugt früh aus der Ballenlinie ausgeschleust. Üblicherweise erfolgt die Überwachung der Qualität der Zellstoffballen durch das Betriebspersonal im Rahmen von Rundgängen, womit eine subjektive, diskontinuierliche Überwachung gegeben ist. Trends, im Sinne einer zunehmenden Verschlechterung der Qualitätseigenschaften der Ballen, werden so eventuell erkannt, nicht jedoch einzelne qualitativ ungenügende Zellstoffballen. Für den Anlagenbetreiber wie auch den Anlagenhersteller ist das effiziente Funktionieren der Ballenlinie wesentlich, da die Ballenlinie am Ende der Prozesskette einer

Zellstoffmaschine die Effizienz der Gesamtanlage maßgeblich mitbestimmt.

Ziel der Erfindung ist ein Verfahren, das eine Steigerung der Effizienz bzw. Verfügbarkeit der Ballenlinie erlaubt.

Dies gelingt erfindungsgemäß dadurch, dass von dem Zellstoffballen mit einem Kamerasystem Bilder des Zellstoffballens gemacht werden, die Bilder mit einem computerimplementierten Rechenmodell zur Bildanalyse ausgewertet werden, wobei das Rechenmodell auf den Bildern geometrische Elemente des Zellstoffballens, ausgewählt aus einer Gruppe bestehend aus Ecken, Kanten, Flächen, und Volumen des Zellstoffballens, identifiziert und aus den identifizierten geometrischen Elementen des Zellstoffballens die geometrischen Eigenschaften des Zellstoffballens beurteilt, wobei das Rechenmodell mit einem Trainingsdatensatz trainiert wurde und der Trainingsdatensatz Trainingsbilder von Zellstoffballen sowie zu den einzelnen Trainingsbildern die identifizierten geometrischen Elemente des Zellstoffballens und die Beurteilung der geometrischen Eigenschaften des Zellstoffballens umfasst. Erfindungsgemäß wird zur Datenerfassung ein Kamerasystem in der Ballenlinie verwendet, wobei Bilder von den Zellstoffballen gemacht werden. Vorteilhafterweise wird das Kamerasystem jeweils so relativ zu dem Zellstoffballen angeordnet, dass auf den Bildern drei Flächen des Zellstoffballens, z.B. zwei benachbarte Seitenflächen und die Deckfläche, abgebildet sind. Zur Auswertung wird ein computerimplementiertes Rechenmodell, beispielsweise ein neuronales Netzwerk, verwendet. Dabei erlaubt das Rechenmodell die geometrischen Elemente des Zellstoffballens, wie z.B. Ecken, Kanten, Flächen, Volumen, Form des Zellstoffballens, auf den Bildern zu identifizieren und die geometrischen Eigenschaften des Zellstoffballens zu beurteilen. Die Beurteilung der geometrischen Eigenschaften erfolgt dabei auf der Basis der identifizierten geometrischen Elemente des Zellstoffballens. Das Kamerasystem umfasst zumindest eine Kamera, kann aber auch mehrere Kameras an verschiedenen Orten in der Ballenlinie umfassen. So kann beispielsweise eine Kamera, die im Prozess vor einem eventuellen Kompaktierungsschritt, z.B. durch eine Ballenpresse, angeordnet ist, dazu dienen Bilder von unverpackten Zellstoffballen zu machen. Eine weitere Kamera, die im Prozess nach dem Kompaktierungsschritt angeordnet ist, kann beispielsweise Bilder von den verpackten Zellstoffballen machen. Die Anordnung der Kamera vor dem Kompaktierungsschritt zur Überwachung der geometrischen Eigenschaften des unverpackten Zellstoffballens ist vorteilhaft, da durch den Kompaktierungsschritt einzelne geometrische Eigenschaften des Zellstoffballens, insbesondere die Form, stark beeinflusst werden. Insbesondere ist es ein Ziel, qualitativ ungenügende Zellstoffballen vor einem Kompaktierungsschritt, z.B. in einer Ballenpresse, zu identifizieren, da qualitativ ungenügende Zellstoffballen gerade in dem Kompaktierungsschritt problematisch sein können. Die Qualitätseigenschaften der unverpackten Zellstoffballen umfassen insbesondere die Schnittqualität der Zellstoffblätter, sowie in Bezug auf den Zellstoffballen dessen Form, Rechtwinkeligkeit oder Stapelgenauigkeit. So ist die Schnittqualität abhängig vom Zustand der in den Längs- bzw. Querschneidern verwendeten Schneiden. Eine lokale Beschädigung der Schneiden, beispielsweise durch eine Scharte, verursacht einen entsprechenden Schaden am geschnittenen Zellstoffblatt. Durch das Stapeln der Zellstoffblätter zu einem Zellstoffballen, offenbart sich der Schaden beispielsweise als Linie auf einer Seitenfläche des Zellstoffballens oder auch als lokale Überhöhung des Ballens, d.h. als Abweichen einer Kante des Zellstoffballens von einer linearen Form. Ebenso kann ein Verschleiß der Schneiden eine Verzerrung der Form des Zellstoffballens verursachen, sodass dessen Form zunehmend vom Ideal eines Würfels bzw. Quaders abweicht. Die Erfindung erlaubt so überraschenderweise Rückschlüsse auf den Zustand der Quer- bzw. Längsschneider. Die Stapelgenauigkeit wiederum beschreibt, wie exakt die Zellstoffblätter bei der Ausbildung des Zellstoffballens übereinander angeordnet wurden. Je exakter die Anordnung der Zellstoffblätter ist, umso schärfer sind auch die Kanten, bzw. umso "glatter" sind die Flächen des Zellstoffballens ausgebildet. Analog weisen die Seitenflächen eines ungenau gestapelten Zellstoffballens vermehrt Schattierungen, bzw. ein vermehrtes Bildrauschen in Bereichen ungenauer Stapelung auf, was von dem Rechenmodell zur Beurteilung der Stapelgenauigkeit herangezogen werden kann.

Generell ist die Form bzw. die Rechtwinkeligkeit des Zellstoffballens wichtig. Je größer die Abweichungen von einem idealen würfelförmigen bzw. quaderförmigen Zellstoffballen sind, umso größere Verwerfungen sind in den nachfolgenden Prozesseinheiten, z.B. der Ballenpresse, möglich.

Die Qualitätseigenschaften der in einer Verpackung verpackten Zellstoffballen umfassen insbesondere den Zustand, die Faltung, die Schnürung oder die Bedruckung der Verpackung. Nach dem Kompaktierungsschritt, z.B. in einer Ballenpresse, wird der Zellstoffballen beispielsweise verpackt. Der Zustand der Verpackung bezeichnet, ob letztere unversehrt oder beschädigt ist. Die zum Verpacken verwendeten Zellstoffblätter ("wrapper sheets") werden um den Zellstoffballen gefaltet, wobei eine gleichmäßige Faltung eine qualitative Faltung darstellt. Zur Sicherung der Faltung folgt meist eine Schnürung der verpackten Zellstoffballen, z.B. mit einer Drahtschnur, wobei eine gleichmäßige Schnürung des Zellstoffballens gewünscht ist. Oft wird der verpackte Zellstoffballen auch bedruckt. **In** die Beurteilung der Druckqualität fließt beispielsweise ein, wie vollständig das Druckmotiv auf der Verpackung der Zellstoffballen aufgedruckt wurde. Erfindungsgemäß wurde das computerimplementierte Rechenmodell mit einem Trainingsdatensatz trainiert. Der Trainingsdatensatz umfasst Trainingsbilder von Zellstoffballen. Der Trainingsdatensatz umfasst weiter zu den einzelnen Trainingsbildern die identifizierten geometrischen Elemente des Zellstoffballens sowie die Beurteilung der geometrischen Eigenschaften des Zellstoffballens.

Es besteht die Möglichkeit, den Trainingsdatensatz explizit in der Ballenlinie einer Zellstoffmaschine zu erstellen. Dazu wird die zumindest eine Kamera des Kamerasystems in der Ballenlinie in einer definierten Weise positioniert. Die Bilder von den Zellstoffballen werden immer dann von der Kamera gemacht, wenn Zellstoffballen und Kamera in der definierten Weise zueinander angeordnet sind. Dadurch ist die Anordnung des Zellstoffballens auf den Bildern ähnlich. Dies hat den Vorteil, dass ein kleiner Trainingsdatensatz zum Trainieren des Rechenmodells spezifisch für die Ballenlinie ausreichend ist.

Ebenso ist denkbar, dass das Trainingsmodell mit einer Vielzahl von Trainingsdatensätzen trainiert wird, wobei Bilder aus unterschiedlichen Ballenlinien mit unterschiedlichen relativen Positionierungen von Zellstoffballen zu Kamera verwendet werden. So kann der Einfluss der relativen Positionierungen von Zellstoffballen zu Kamera auf die Vorhersage des Rechenmodells minimiert werden. Dies erfordert ein umfangreiches Training des Rechenmodells mit Trainingsdatensätzen aus verschiedenen Ballenlinien, was ein längerfristiger Prozess ist, im Umkehrschluss aber später eine sofortige Verwendung des so trainierten Rechenmodells in einer dem Rechenmodell bislang unbekannten Ballenlinie erlaubt.

Der Trainingsdatensatz kann beispielsweise auch die Beurteilung umfassen, ob ein auf einem Trainingsbild dargestellter Zellstoffballen in der Ballenlinie verbleiben soll oder aus der Ballenlinie auszuschleusen ist. Ein so trainiertes Rechenmodell erlaubt das automatisierte Ausschleusen von Zellstoffballen aus der Ballenlinie auf Basis der Beurteilung durch das Rechenmodell.

Das erfindungsgemäße Verfahren ermöglicht somit eine kontinuierliche, automatisierte, reproduzierbare, objektive Klassifizierung des Zellstoffballens und dessen Qualitätseigenschaften. Insbesondere ist die Auswertung spezifischer Qualitätseigenschaften mit dem trainierten Rechenmodell möglich.

Eine vorteilhafte Ausgestaltung des Verfahrens besteht darin, dass der Zellstoffballen in eine relativ zu dem Kamerasystem definierte Position bewegt wird und das Kamerasystem Bilder von dem Zellstoffballen in der definierten Position macht. Ein möglicher Einfluss aus der Positionierungen des Zellstoffballens zur Kamera auf die Vorhersage des Rechenmodells wird so minimiert, da die Anordnung des Zellstoffballens auf den Bildern ähnlich ist. Wird ein Rechenmodell dann explizit für eine Ballenlinie einer Zellstoffmaschine trainiert, so erlaubt ein im Umfang kleiner Trainingsdatensatz ein ausreichendes bzw. schnelles Trainieren des Rechenmodells.

In einer weiteren vorteilhaften Ausgestaltung des Verfahrens wird eine Lichtquelle zur Ausleuchtung des Zellstoffballens verwendet, wobei das Kamerasystem Bilder von dem ausgeleuchteten Zellstoffballen macht. Das Ausleuchten des Zellstoffballens mit einer Lichtquelle zur Ausleuchtung beim Machen der Bilder erlaubt definierte Lichtverhältnisse einzustellen. Ein Einfluss der Lichtverhältnisse auf die Vorhersage des Rechenmodells wird dadurch minimiert, da die Lichtverhältnisse definiert bzw. gleichbleibend sind und die Bilder bei den definierten Lichtverhältnissen erstellt wurden. Dies ermöglicht den Umfang des Trainingsdatensatzes klein zu halten bei gleichbleibender Aussagekraft des Rechenmodells.

In einer günstigen Ausgestaltung des Verfahrens wird mit einer Lichtquelle zur Projektion einer Linie, insbesondere einer kohärenten Lichtquelle, z.B. einem Linienlaser, eine Linie auf eine Fläche des Zellstoffballens projiziert. Aus einer Verzerrung der Linie auf der Fläche des Zellstoffballens kann das Rechenmodell die Qualitätseigenschaften des Zellstoffballens, insbesondere die Stapelgenauigkeit oder die Schnittqualität der Einzelblätter, beurteilen. Die Stapelgenauigkeit beschreibt, wie exakt die Zellstoffblätter bei der Ausbildung des Zellstoffballens übereinander angeordnet sind. Je weniger exakt die Zellstoffblätter übereinander zu einem Zellstoffballen angeordnet sind, umso ungleichmäßiger sind beispielsweise Kanten des Zellstoffballens, bzw. umso "rauer" ist die Flächen des Zellstoffballens, was eine stärkere Verzerrung einer auf eine Fläche des Zellstoffballens projizierten Linie nach sich zieht. Bei Verwendung einer kohärenten Lichtquelle, z.B. einem Linienlaser, bildet die Linie exakt die Vor- bzw. Rücksprünge der gestapelten Zellstoffblätter als Verzerrungen, bzw. Sprünge der projizierten Linie, ab. Das Rechenmodell wertet die Verzerrungen bzw. Sprünge der projizierten Linie aus und erlaubt so, die Stapelgenauigkeit zu erfassen. Die Verzerrung der Linie kann beispielsweise über die Größe und Häufigkeit der Sprünge der auf den Zellstoffballen projizierten Linie quantifiziert werden.

In einer vorteilhaften Ausgestaltung des Verfahrens wurde das Rechenmodell mit einem Kalibrierungsdatensatz kalibriert, wobei der Kalibrierungsdatensatz Kalibrierungsbilder von Zellstoffballen sowie zu den einzelnen Kalibrierungsbildern eine Quantifizierung der geometrischen Elemente des Zellstoffballens, z.B. der Länge der Kante, der Fläche oder dem Volumen des Zellstoffballens, umfasst. Nach der Kalibrierung erlaubt das Rechenmodell quantitative Aussagen zum Zellstoffballen und das Rechenmodell kann beispielsweise die Kantenlänge, das Volumen oder die Fläche einzelner Seiten des Zellstoffballens ausgeben. Die Quantifizierung der geometrischen Elemente auf den Kalibrierungsbildern kann beispielsweise durch das Befestigen von zumindest einer und bevorzugt von zwei Skalen auf einer Fläche des Zellstoffballens erfolgen. Besonders vorteilhaft weist der Hintergrund des Zellstoffballens ein Kalibriermuster auf, beispielsweise ein Schachbrettmuster mit definierten Abmessungen.

Die Erfindung betrifft auch eine Ballenlinie einer Zellstoffmaschine umfassend ein Kamerasystem und Mittel zur Durchführung der erfindungsgemäßen Verfahrensschritte.

Die Erfindung betrifft weiter ein Computerprogrammprodukt, umfassend Befehle, zur Durchführung der erfindungsgemäßen Verfahrensschritte in einer erfindungsgemäßen Ballenlinie einer Zellstoffmaschine.

Die Erfindung wird nun anhand der Zeichnungen beispielhaft beschrieben.
Fig. 1 zeigt einen Zellstoffballen in eine Ballenlinie
Fig. 2 zeigt einen Zellstoffballen mit vom Rechenmodell identifizierten Flächen.
Fig. 3 zeigt einen Zellstoffballen mit vom Rechenmodell identifizierten Kanten.

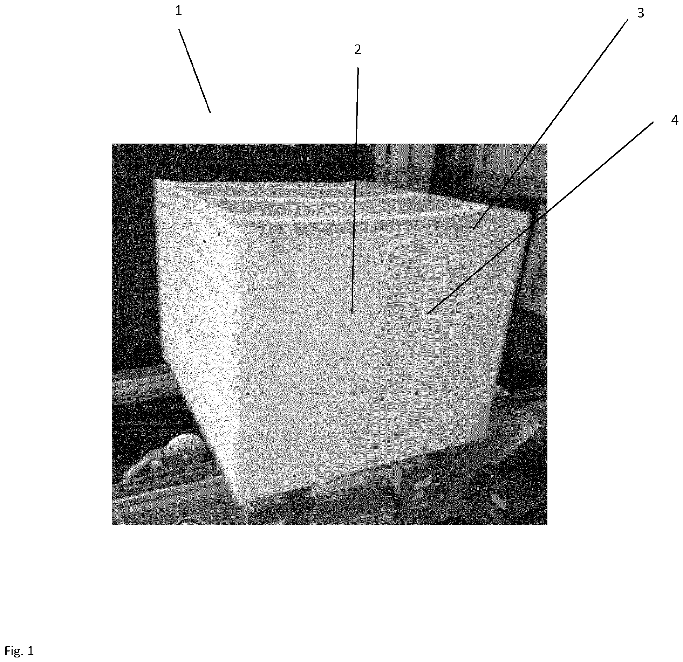

Fig. 1 zeigt einen unverpackten, aus geschnittenen Zellstoffblättern gestapelten Zellstoffballen 1 in eine Ballenlinie. Das menschliche Auge kann die geometrischen Elemente des Zellstoffballens 1, beispielsweise einzelne Flächen 2, bzw. Kanten 3 gut identifizieren. Entsprechend der relativen Anordnung von dem Zellstoffballen 1 zu dem bildgebenden Kamerasystem sind drei Flächen des Zellstoffballens zu erkennen. Mit dem erfindungsgemäßen computerimplementierten Rechenmodell zur Bildanalyse kann das in Fig. 1 wiedergegebene Bild ausgewertet werden. Dabei identifiziert das Rechenmodell auf dem Bild geometrische Elemente des Zellstoffballens 1, ausgewählt aus einer Gruppe bestehend aus Ecken, Kanten 3, Flächen 2, und Volumen des Zellstoffballens, und beurteilt auf Basis der identifizierten geometrischen Elemente des unverpackten Zellstoffballens 1 die Qualitätseigenschaften des Zellstoffballens 1, wie z.B. die Schnittqualität der Zellstoffblätter sowie die Form, Rechtwinkeligkeit bzw. Stapelgenauigkeit. In Fig. 1 ist auch eine auf eine Fläche des Zellstoffballens 1 projizierte Linie 4 zu erkennen, wobei in diesem optionalen Verfahrensschritt mit einer Lichtquelle zur Projektion einer Linie, insbesondere einer kohärenten Lichtquelle, z.B. einem Linienlaser, die Linie 4 auf die Fläche 2 des Zellstoffballens 1 projiziert wird. Dieser optionale Verfahrensschritt erlaubt insbesondere eine vorteilhafte Beurteilung der Stapelgenauigkeit bzw. der Schnittqualität der Einzelblätter anhand der Verzerrung der Linie 4 auf der Fläche 2 des Zellstoffballens 1.

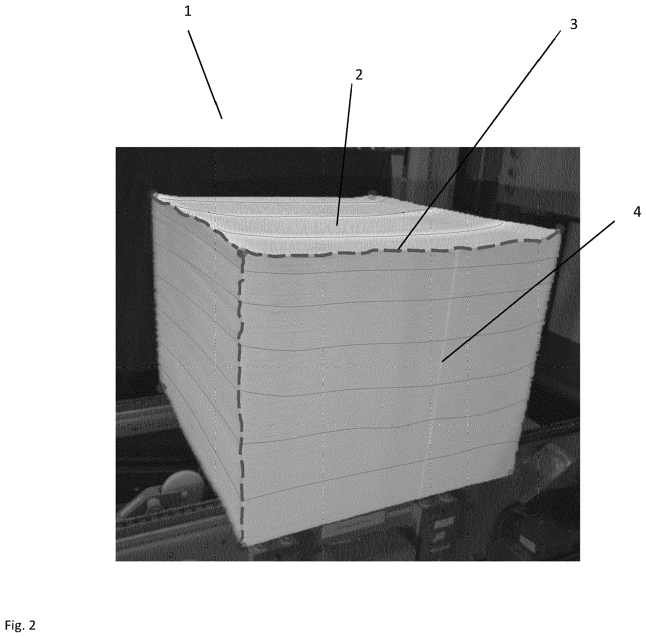

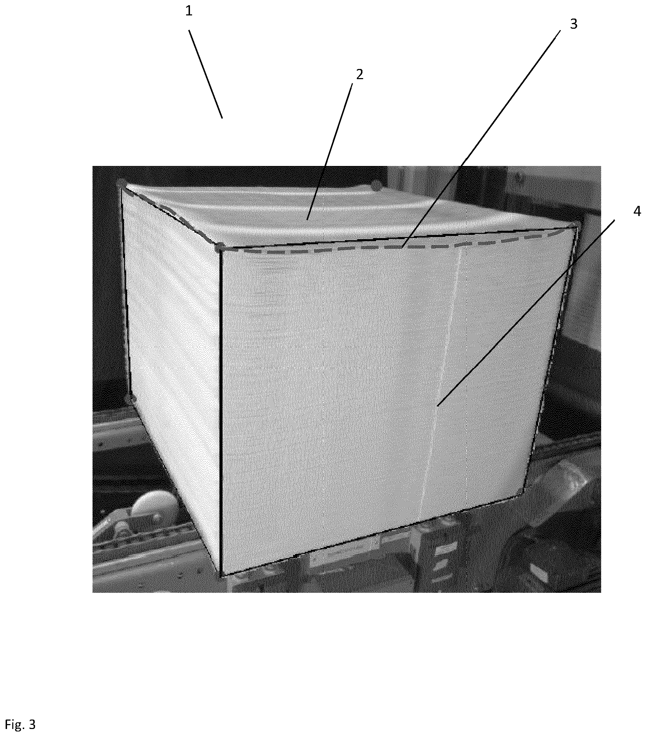

Fig. 2 zeigt einen unverpackten Zellstoffballen 1 und die vom Rechenmodell identifizierten schraffiert dargestellten Flächen 2 mit kugelförmig dargestellten Ecken. Die Kanten 3 als Abgrenzung benachbarter Flächen zueinander wurden somit vom Rechenmodell ebenfalls identifiziert. Fig. 3 zeigt entsprechend den Zellstoffballen 1 und die vom Rechenmodell identifizierten und strichliert dargestellten Kanten 3, wobei ein idealer Zellstoffballen analog einem Würfel bzw. Quader angedeutet ist. Das Rechenmodell erlaubt so die Qualitätseigenschaften, insbesondere die geometrischen Eigenschaften, wie zum Beispiel die Form bzw. Rechtwinkeligkeit, des Zellstoffballens 1 zu überwachen. Aus der Form der vom Rechenmodell identifizierten Kanten kann das Rechenmodell beispielsweise weiter die Schnittqualität der Zellstoffblätter und die Stapelgenauigkeit des Zellstoffballens beurteilen. Durch die optionale Verwendung einer Lichtquelle zur Projektion einer Linie auf eine Seitenfläche des Zellstoffballens wird auf Basis der Beurteilung der Verzerrung der projizierten Linie eine genauere Beurteilung verschiedener Qualitätseigenschaften des Zellstoffballens 1, wie z.B. der Stapelgenauigkeit bzw. der Schnittqualität, möglich.

Die vorliegende Erfindung bietet zahlreiche Vorteile. Sie erlaubt eine Steigerung der Effizienz bzw. Verfügbarkeit der Ballenlinie durch eine kontinuierliche, automatisierte Überwachung der Qualitätseigenschaften der Zellstoffballen. Die Qualitätsüberwachung der Zellstoffballen erfolgt dabei objektiv und reproduzierbar, wobei qualitativ ungenügende Zellstoffballen, welche beispielsweise ungenügende geometrische Eigenschaften, insbesondere eine ungenügende Form, aufweisen, frühzeitig aus der Ballenlinie ausgeschleust werden können, ohne in nachfolgenden Prozessschritten Probleme zu verursachen. Die vorliegende Erfindung erlaubt weiter Rückschlüsse auf den Zustand bzw. eine Überwachung des Zustands der in den Längs- bzw. Querschneidern verwendeten Schneiden.

### Bezugszeichen

(1) Zellstoffballen
(2) Fläche
(3) Kante
(4) Linie

## Patentansprüche

1. Verfahren zur Überwachung der geometrischen Eigenschaften, wie zum Beispiel der Form, eines Zellstoffballens (1) in einer Ballenlinie einer Zellstoffmaschine, wobei geschnittene Zellstoffblätter zu einem Zellstoffballen (1) gestapelt sind und von dem Zellstoffballen (1) mit einem Kamerasystem Bilder des Zellstoffballens (1) gemacht werden und die Bilder mit einem computerimplementierten Rechenmodell zur Bildanalyse ausgewertet werden, **dadurch gekennzeichnet, dass** das Rechenmodell auf den Bildern geometrische Elemente des Zellstoffballens (1) ausgewählt aus einer Gruppe bestehend aus Ecken, Kanten (3), Flächen (2) und Volumen des Zellstoffballens, identifiziert und aus den identifizierten geometrischen Elementen des Zellstoffballens (1) die geometrischen Eigenschaften des Zellstoffballens (1) beurteilt, wobei das Rechenmodell mit einem Trainingsdatensatz trainiert wurde und der Trainingsdatensatz Trainingsbilder von Zellstoffballen (1) sowie zu den einzelnen Trainingsbildern die identifizierten geometrischen Elemente des Zellstoffballens (1) und die Beurteilung der geometrischen Eigenschaften des Zellstoffballens (1) umfasst.

2. Verfahren nach Anspruch 1, wobei der Zellstoffballen (1) in eine relativ zu dem Kamerasystem definierte Position bewegt wird und das Kamerasystem Bilder von dem Zellstoffballen (1) in der definierten Position macht.

3. Verfahren nach einem der Ansprüche 1 bis 2, wobei eine Lichtquelle zur Ausleuchtung des Zellstoffballens (1) verwendet wird und das Kamerasystem Bilder von dem ausgeleuchteten Zellstoffballen (1) macht.

4. Verfahren nach einem der Ansprüche 1 bis 3, wobei mit einer Lichtquelle zur Projektion einer Linie (4), insbesondere einer kohärenten Lichtquelle, z.B. einem Linienlaser, eine Linie (4) auf eine Fläche (2) des Zellstoffballens (1) projiziert wird und das Rechenmodell aus einer Verzerrung der Linie (4) auf der Fläche (2) des Zellstoffballens (1) die Stapelgenauigkeit des Zellstoffballens (1) oder die Schnittqualität der Einzelblätter beurteilt.

5. Verfahren nach einem der Ansprüche 1 bis 4, wobei mit dem Kamerasystem Bilder des Zellstoffballens (1) gemacht werden, der Zellstoffballen unverpackt ist und das Rechenmodell die Schnittqualität der Zellstoffblätter bzw. die Form, Rechtwinkeligkeit oder Stapelgenauigkeit des Zellstoffballens (1) beurteilt.

6. Verfahren nach einem der Ansprüche 1 bis 5, wobei mit dem Kamerasystem Bilder des Zellstoffballens (1) gemacht werden, der Zellstoffballen (1) in einer Verpackung verpackt ist und das Rechenmodell den Zustand, die Faltung, die Schnürung oder die Bedruckung der Verpackung beurteilt.

7. Verfahren nach einem der Ansprüche 1 bis 6, wobei das Rechenmodell mit einem Kalibrierungsdatensatz kalibriert wurde und der Kalibrierungsdatensatz Kalibrierungsbilder von Zellstoffballen (1) sowie zu den einzelnen Kalibrierungsbildern eine Quantifizierung der geometrischen Elemente des Zellstoffballens (1), z.B. der Länge der Kante (3), der Fläche (2) oder des Volumens des Zellstoffballens (1), umfasst.

8. Ballenlinie einer Zellstoffmaschine mit einem Kamerasystem und Mittel, die geeignet sind, das Verfahren nach einem der Ansprüche 1 bis 7 auszuführen.

9. Computerprogrammprodukt, umfassend Befehle, die bewirken, dass die Vorrichtung des Anspruchs 8 die Verfahrensschritte nach einem der Ansprüche 1 bis 7 ausführt.

## Claims

1. Method for monitoring the geometrical properties, such as the shape, of a pulp bale (1) in a baling line of a pulp machine, wherein cut pulp sheets are stacked to form a pulp bale (1) are and images of the pulp bale (1) are taken with a camera system of the pulp bale (1) and the images are evaluated with a computer-implemented computational model for image analysis, **characterised in that** that the computer model on the images geometric elements of the pulp bale (1) selected from a group consisting of corners, edges (3), surfaces (2) and volume of the pulp bale, identified and from the identified geometric elements of the pulp bale (1) assessing the geometric properties of the pulp bale (1), wherein the computational model has been trained with a training data set and the training data set comprises training images of pulp bales (1) and, for the individual training images, the identified geometric elements of the pulp bale (1) and the assessment of the geometric properties of the pulp bale (1).

2. Method according to claim 1, wherein the pulp bale (1) is moved to a defined position relative to the camera system and the camera system takes images of the pulp bale (1) in the defined position.

3. Method according to one of claims 1 to 2, wherein a light source is used to illuminate the pulp bale (1) and the camera system takes images of the illuminated pulp bale (1).

4. Method according to one of claims 1 to 3, wherein a line (4) is projected onto a surface (2) of the pulp bale (1) using a light source for projecting a line (4), in particular a coherent light source, e.g. a line laser, and the calculation model assesses the stacking accuracy of the pulp bale (1) or the cutting quality of the individual sheets from a distortion of the line (4) on the surface (2) of the pulp bale (1).

5. Method according to one of claims 1 to 4, wherein images of the pulp bale (1) are taken with the camera system, the pulp bale is unpacked and the computational model assesses the cut quality of the pulp sheets or the shape, squareness or stacking accuracy of the pulp bale (1).

6. Method according to one of claims 1 to 5, wherein images of the pulp bale (1) are made with the camera system, the pulp bale (1) is wrapped making a package and the computational model assesses the condition, folding, tying, or printing of the package.

7. Method according to one of claims 1 to 6, wherein the computational model has been calibrated with a calibration data set and the calibration data set comprises calibration images of pulp bales (1) and, for the individual calibration images, a quantification of the geometric elements of the pulp bale (1), e.g. the length of the edge (3), the area (2) or the volume of the pulp bale (1).

8. Baling line of a pulp machine with a camera system and means suitable for carrying out the method according to one of claims 1 to 7.

9. A computer program product comprising instructions for causing the device of claim 8 to perform the method steps of one of claims 1 to 7.

## Revendications

1. Procédé de surveillance de propriétés géométriques, par exemple la forme, d'une balle de pâte (1) dans une ligne de mise en balle d'une machine à fabriquer la pâte à papier, dans lequel des feuilles de pâte découpées sont empilées de manière à former une balle de pâte (1) et des images de la balle de pâte (1) sont prises à l'aide d'un système de caméra et les images sont évaluées au moyen d'un modèle informatique mis en œuvre par ordinateur pour analyser les images, **caractérisé en ce que** le modèle informatique identifie sur les images des éléments géométriques de la balle de pâte (1) sélectionné dans un groupe constitué de coins, de bords (3), de surfaces (2) et de volumes de la balle de pâte, et à partir des éléments géométriques identifiés de la balle de pâte (1) évalue les propriétés géométriques de la balle de pâte (1), dans lequel le modèle informatique a été entraîné au moyen d'un ensemble de données d'entraînement et l'ensemble de données d'entraînement comprend des images d'entraînement des balles de pâte (1) et, pour les différentes images d'entraînement, les éléments géométriques identifiés de la pâte (1) et l'évaluation des propriétés géométriques de la balle de pâte (1).

2. Procédé selon la revendication 1, dans lequel la balle de pâte (1) est déplacée dans une position définie par rapport au système de caméra et le système de caméra prend des images de la balle de pâte (1) dans la position définie.

3. Procédé selon l'une quelconque des revendications 1 à 2, dans lequel une source de lumière est utilisée pour éclairer la balle de pâte (1) et le système de caméra prend des images de la balle de pâte éclairée (1).

4. Procédé selon l'une quelconque des revendications 1 à 3, dans lequel une ligne (4) est projetée sur une surface (2) de la balle de pâte (1) à l'aide d'une source de lumière destinée à projeter une ligne (4), en particulier une source de lumière cohérente, par exemple un laser d'alignement, et le modèle informatique évalue la précision d'empilement de la balle de pâte (1) ou la qualité de la coupe des différentes feuilles à partir d'une déformation de la ligne (4) sur la surface (2) de la balle de pâte (1).

5. Procédé selon l'une quelconque des revendications 1 à 4, dans lequel les images de la balle de pâte (1) sont prises à l'aide du système de caméra, la balle de pâte est déballée et le modèle informatique évalue la qualité de coupe des feuilles de pâte ou la forme, les angles droits ou la précision d'empilement de la balle de pâte (1).

6. Procédé selon l'une quelconque des revendications 1 à 5, dans lequel les images de la balle de pâte (1) sont réalisées à l'aide d'un système de caméra, la balle de pâte (1) est enveloppée dans un emballage et le modèle informatique évalue l'état, le pliage, le cerclage ou l'impression de l'emballage.

7. Procédé selon l'une quelconque des revendications 1 à 6, dans lequel le modèle informatique a été étalonné à l'aide d'un ensemble de données d'étalonnage et l'ensemble de données d'étalonnage comprend des images d'étalonnage des balles de pâte (1) et, pour chacune des images d'étalonnage, une quantification des éléments géométriques de la balle de pâte (1), par exemple la longueur du bord (3), la surface (2) ou le volume de la balle de pâte (1).

8. Ligne de mise en balle d'une machine à fabriquer la pâte à papier dotée d'un système de camera et d'un moyen qui sont appropriés pour mettre en œuvre le procédé selon l'une quelconque des revendications 1 à 7.

9. Produit programme informatique comprenant des instructions qui sont destinées à amener le dispositif de la revendication 8 à réaliser les étapes de procédé selon l'une quelconque des revendications 1 à 7.
